# EUROPEAN PATENT APPLICATION

(11) **EP 2 012 177 A1**
(43) Date of publication of application: **07.01.2009**
(21) Application number: 08008124.3
(22) Date of filing: 28.04.2008
(51) Int. Cl.: G02F 1/13357

(54) **Backlight module and display apparatus using the same**

(30) Priority: 04.07.2007 TW 96210917 U
(71) Applicant: Coretronic Corporation, Hsinchu Hsin chu (TW)
(72) Inventor: Kuo, Tzu-Shou, Hsinchu (TW); Chen, Pei-Ting, Hsinchu (TW)
(74) Representative: TER MEER - STEINMEISTER & PARTNER GbR

(57) **Abstract**

A backlight module (220) including a back bezel (231), a light source (250), a control circuit board (260) and a sensing unit (270) is disclosed. The light source is arranged inside the back bezel to produce light. The control circuit board is arranged outside the back bezel and closely attached to the back bezel and electrically connected with the light source. The sensing unit is arranged outside the back bezel and electrically connected to the control circuit board.

## Description

### BACKGROUND OF THE INVENTION

### Field of the Invention

The invention relates to a backlight module and display apparatus using the same and more particularly, to such a backlight module and display apparatus using the same in which the control circuit board is closely attached to the back bezel.

### Description of Related Art

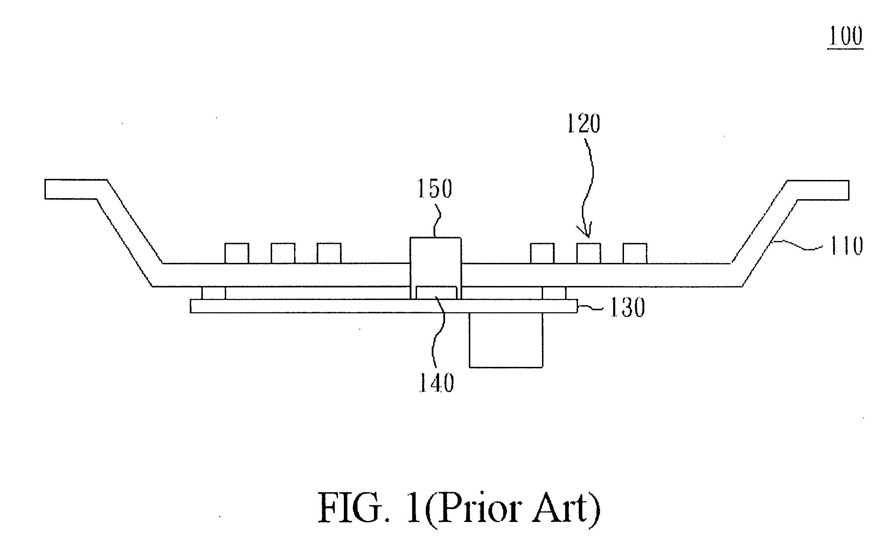

Referring to FIG. 1, a conventional backlight module 100 includes a back bezel 110, a light source 120, a control circuit board 130, a sensing unit 140 and a light guide element 150. The light source 120 includes, for example, a plurality of light emitting diodes evenly arranged on the inner side of the back bezel 110 and electrically connected to the control circuit board 130 outside back bezel 110. The sensing unit 140 is, for example, a light emitting diode that has its bottom pins electrically connected to the control circuit board 130 and is mounted on the surface of the control circuit board 130 that faces the back bezel 110 at a distance to avoid oversaturation. At this time, the top light receiving side of the sensing unit 140 senses the performance of the mixed light or luminance brightness of the light source 120 via the light guide element 150. The related control circuit of the control circuit board 130 receives electrical signal converted from light signal by the sensing unit 140 and compares received electrical signal with pre-stored data for analysis, and then controls the operation of the light source 120 subject to the analysis result, keeping the light source 120 in the desired brightness subject to this feedback adjustment.

However, when other integrated devices of the control circuit board 130 are disposed at the same side relative to the sensing unit 140 (i.e., between the control circuit board 130 and the back bezel 110), the distance between the control circuit board 130 and the back bezel 110 or the hole on the back bezel 110 corresponding to the light guide element 150 may be increased to avoid mechanical interference and to facilitate heat dissipation. However, this arrangement complicates installation and wiring, or affects brightness performance of the backlight module 100. On the other hand, if the other devices are disposed at a different side relative to the sensing unit 140, this arrangement increases the dimension of the backlight module 100, and the control circuit board 130 needs to use a relatively expensive double-side PCB (printed circuit board), increasing the manufacturing cost of the backlight module 100.

### SUMMARY OF THE INVENTION

In view of the aforesaid circumstances, the invention provides a backlight module and display apparatus using the same, which has the control circuit board attached to the back bezel and the sensing unit disposed outside the back bezel to effectively reduce the dimension and cost of the backlight module and to improve the installation efficiency without affecting the brightness performance.

According to one embodiment of the present invention, the backlight module includes a back bezel, a light source, a control circuit board and a sensing unit. The light source is mounted inside the back bezel, and adapted for producing light. The control circuit board is mounted outside the back bezel and closely attached to the back bezel, and electrically connected with the light source. The sensing unit is mounted outside the back bezel, and electrically connected to the control circuit board.

According to one embodiment of the present invention, a display apparatus includes a display panel and a backlight module. The backlight module provides a backlight to the display panel, and includes a back bezel, a light source, a control circuit board and a sensing unit. The light source is arranged inside the back bezel to produce light. The control circuit board is arranged outside the back bezel and closely attached to the back bezel, and electrically connected with the light source. The sensing unit is arranged outside the back bezel, and electrically connected to the control circuit board.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view of a convectional backlight module.

FIG. 2 is a schematic view of a display apparatus in accordance with a first embodiment of the present invention.

FIG. 3 is a schematic elevation of a sensing unit shown in FIG. 2.

FIG. 4 is a schematic view of a display apparatus in accordance with a second embodiment of the present invention.

FIG. 5 is a schematic view of a display apparatus in accordance with a third embodiment of the present invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

### FIRST EMBODIMENT

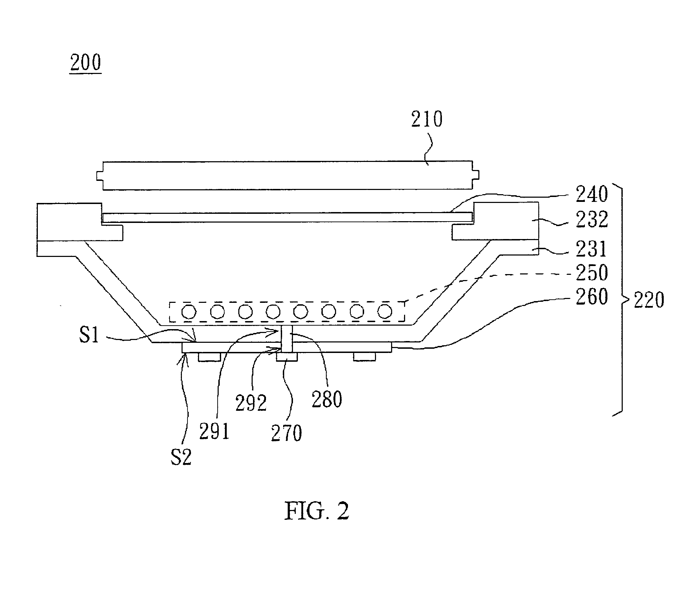

Referring to FIG. 2, a display apparatus 200 in accordance with a first embodiment of the present invention is shown including a display panel 210 and a backlight module 220. The display panel 210 according to this embodiment is a liquid crystal display panel. The backlight module 220 is adapted for providing a backlight to the display panel 210, including a back bezel 231, a frame 232, an optical film 240, a light source 250, a control circuit board 260, a sensing unit 270 and a light guide element 280. The frame 232 is disposed at the top side of the back bezel 231 to hold the optical film 240 in place. The light source 250 according to this embodiment includes a plurality of red, green and blue LEDs (light emitting diodes) arranged in an array on the light output side of the back bezel 231.

The control circuit board 260 is electrically connected with the light source 250 for controlling driving of the light source 250. The control circuit board 260 according to this embodiment uses a single-sided PCB, having a first side S 1 and a second side S2 opposite to the first side S 1. As shown in FIG. 2, the first side S 1 of the control circuit board 260 is closely attached to the side of the back bezel 231 that does not output light and fixedly secured thereto by means of a plug or screw joint. The sensing unit 270 and the other integrated devices of the control circuit board 260 are arranged on one same side of the control circuit board 260, namely, the second side S2. Further, holes 291 and 292 are respectively formed on the back bezel 231 and the control circuit board 260. The light guide element 280 is inserted through the holes 291 and 292 guides a part of the light produced by the light source 250 out of the back bezel 231 to the sensing unit 270. It must be pointed out that using the light guide element 280 is simply to guide the light to the sensing unit 270. However, the use of the light guide element 280 is not a limitation. Light may be directly guided by the holes 291 and 292 to the sensing unit 270.

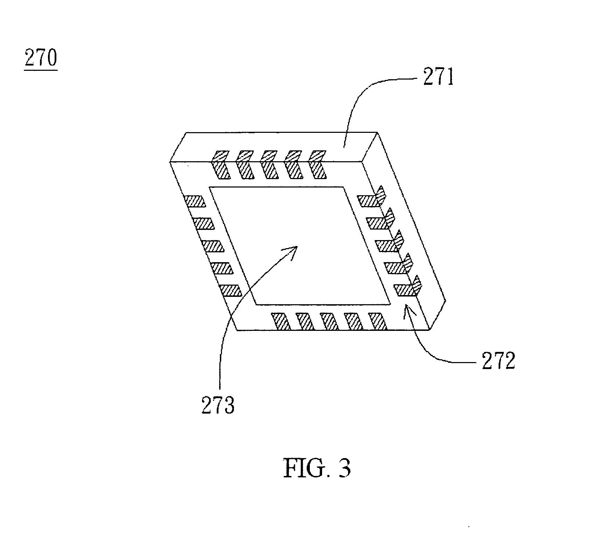

The sensing unit 270 may be a photosensor, photodiode or phototransistor. As shown in FIG. 3, the sensing unit 270 according to this first embodiment includes a body 271, a connection portion 272 (the slated area) and a light sensing portion 273. The connection portion 272 and the light sensing portion 273 are located on one same side of the body 271. As shown in FIG. 2, the connection portion 272 is electrically connected to the respective pins or lead wires at the second side S2 of the control circuit board 260, and the light sensing portion 273 faces the holes 291 and 292 to receive a part of the light that is transferred through the light guide element 280.

The light emitted by the light source 250, except the part that is transferred to the sensing unit 270, is radiated onto the display panel 210 through the optical film 240, enabling the display apparatus 200 to display the desired picture image. The sensing unit 270 converts the light signal received through the light sensing portion 273 into a corresponding electrical signal, and transmits the electrical signal to the control circuit board 260 through the connection portion 272 so that the control circuit board 260 knows the current brightness performance of the light source 250. Because the LEDs of the light source 250 may have different brightness (individual difference at factory) and because of the luminous efficiency of the LEDs of the light source 250 reduces gradually with age, the control circuit board 260 utilizes the sensing unit 270 to detect the brightness performance of the light source 250, compares the detection result with pre-stored data for analysis, and controls the operation of the light source 250 subject to the analysis result, maintaining the brightness performance of the backlight module 220 at the expected level

Further, when compared with the prior art design, direct bonding between the control circuit board 260 and the back bezel 231 according to the present invention effectively reduce the dimension of the backlight module 220 without affecting brightness performance. Further, except the advantage that the control circuit board 260 may use a relatively cheaper single-sided PCB, this embodiment allows the sensing unit 270 and the other integrated devices to be arranged on the same side, facilitating fabrication and further calibration and maintenance.

### SECOND EMBODIMENT

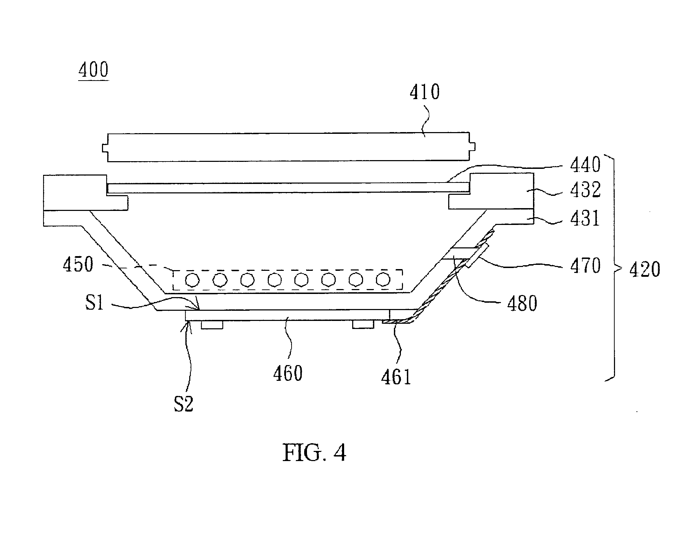

Referring to FIG. 4, a display apparatus 400 in accordance with a second embodiment of the present invention is substantially similar to the aforesaid first embodiment with the exception that the backlight module 420 of the display apparatus 400 according to this second embodiment further includes a circuit board 461. The circuit board 461, for example, is a flexible circuit board, having one end affixed to one lateral side of the back bezel 431 by means of a plug or screw joint and the other end is arranged on the second side S2 of the control circuit board 460 to be electrically connected to the control circuit board 460. At this time, the sensing unit 470 is arranged on the end of the circuit board 461, as shown in FIG. 4, and a light guide structure, formed of, for example, holes and light guide element 480, is provided to receive a part of the light that is radiated onto the lateral side of the back bezel 431, and the circuit board 460 transmits the converted electrical signal to the control circuit board 460 for processing.

### THIRD EMBODIMENT

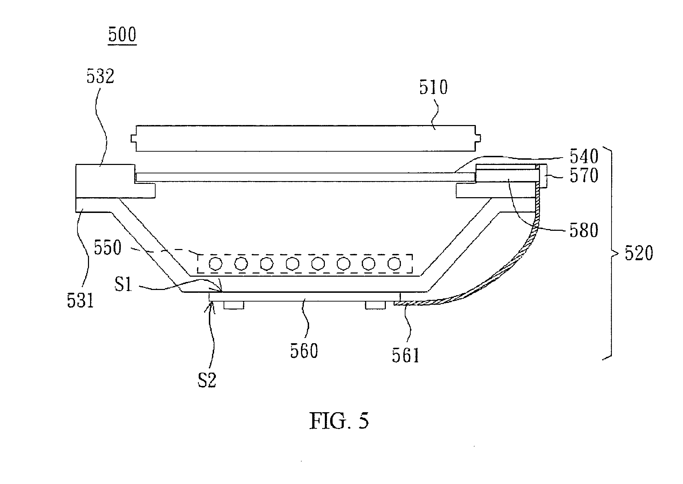

Referring to FIG. 5, a display apparatus 500 in accordance with a third embodiment of the present invention is substantially similar to the aforesaid second embodiment with the exception that the circuit board 561 of the backlight module 520 of the display apparatus 500 according to this third embodiment has one end affixed to one lateral side of the frame 532 and the other end electrically connected to the control circuit board 560. At this time, as shown in FIG. 5, according to the position where the sensing unit 570 is arranged on the circuit board 561, the sensing unit 570 receives a part of the light that goes out of one lateral side of the optical film 540, and the circuit board 561 transmits the converted electrical signal to the control circuit board 560 for processing.

Although particular embodiments of the invention have been described in detail for enabling any person skilled in the art to know the invention, various modifications and enhancements may be made without departing from the spirit and scope of the invention. For example, the number and distribution locations of the sensing unit may be adjusted subject to requirements to enhance detection accuracy. Further, the fixation arrangement of the control circuit board or circuit board may be changed subject to installation and fabrication needs. In other embodiments, the sensing unit is not limited to the structure used in FIG. 3, i.e., the light sensing portion and the connection portion may be disposed at different sides of the body, or the light sensing portion may be made in any of a variety of other geometric shapes and the light guide structure is relatively changed to match the light sensing portion. Any modifications and enhancements shall not depart from the spirit and scope of the invention in which the control circuit board is closely attached to the back bezel to reduce the dimension and manufacturing cost of the backlight module.

The backlight module and display apparatus using the same as described above embodiments is to have the control circuit board closely attached to the back bezel of the backlight module so that the sensing unit and the integrated devices of the control circuit board are arranged on the same side. This design effectively reduces the dimension and manufacturing cost of the backlight module, improves the installation efficiency of the backlight module without affecting the brightness performance of the backlight module. When compared to the prior art design, the invention facilitates further calibration and maintenance.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A backlight module used in a display apparatus, comprising:
a back bezel;
a light source mounted inside said back bezel and adapted for producing light;
a control circuit board mounted outside said back bezel and closely attached to said back bezel, said control circuit board being electrically connected with said light source; and
a sensing unit mounted outside said back bezel and electrically connected with said control circuit board.

2. The backlight module as claimed in claim 1, wherein said control circuit board comprises a first side and a second side opposite to said first side, said first side is closely attached to said back bezel, and said sensing unit is arranged on the second side of said control circuit board.

3. The backlight module as claimed in claim 2, wherein said back bezel comprises a first hole, said control circuit board comprises a second hole corresponding to said first hole of said back bezel, and said sensing unit comprises a light sensing portion facing said first hole and said second hole to receive a part of the light produced by said light source through said first hole and said second hole.

4. The backlight module as claimed in claim 3, wherein said sensing unit further comprises a body and a connection portion, said connection portion is electrically connected to said control circuit board, and said light sensing portion and said connection portion of said sensing unit are disposed at one same side of said body.

5. The backlight module as claimed in claim 3, further comprising a light guide element inserted through said first hole and said second hole for guiding the light produced by said light source to said light sensing portion.

6. The backlight module as claimed in claim 1, further comprising a circuit board; wherein said control circuit board comprises a first side and a second side opposite to said first side, the first side of said control circuit board is closely attached to a bottom side of said back bezel, said circuit board has one end thereof disposed at one lateral side of said back bezel and an opposite end thereof arranged on the second side of said control circuit board to be electrically connected with said control circuit board, and said sensing unit is arranged on the end of said circuit board.

7. The backlight module as claimed in claim 6, wherein said circuit board is a flexible circuit board.

8. The backlight module as claimed in claim 1, further comprising a frame, an optical film and a circuit board; wherein said frame is arranged on a top side of said back bezel to hold said optical film in place, said circuit board has one end thereof arranged on one lateral side of said frame and an opposite end thereof electrically connected with said control circuit board, and said sensing unit is arranged on the end of said circuit board.

9. The backlight module as claimed in claim 1, wherein said light source comprises a plurality of light emitting diodes.

10. A display apparatus comprising:
a display panel; and
a backlight module according to anyone of the preceding claims, said backlight module being adapted for providing a backlight to said display panel.
